# FASCICULE DE BREVET EUROPEEN

(11) **EP 0 785 451 B1**
(45) Date de publication et mention de la délivrance du brevet: **21.03.2007**
(21) Numéro de dépôt: 97400041.6
(22) Date de dépôt: 09.01.1997
(51) Int. Cl.: G02B 6/44

(54) **Câble optique à renforts périphériques extrudés**
Optisches Kabel mit peripheren extrudierten Verstärkungselementen
Optical cable with peripheral extruded reinforcing elements

(30) Priorité: 19.01.1996 FR 9600586
(43) Date de publication de la demande: 23.07.1997
(73) Titulaire: Draka Comteq B.V., 1021 JZ Amsterdam (NL)
(72) Inventeur: Tatat,Olivier, 78800 Houilles (FR)
(74) Mandataire: Blokland, Arie

(56) Documents cités:
- EP-A- 0 141 723
- EP-A- 0 185 615
- EP-A- 1 063 550
- GB-A- 2 017 335

## Description

La présente invention concerne les câbles optiques diélectriques du type comprenant une âme contenant les fibres optiques et des moyens de renfort périphériques destinés à servir d'armure au câble, ainsi que le procédé de fabrication de tels câbles.

Les câbles optiques actuels et principalement les câbles diélectriques enterrés, sont armés avec des fibres de verre ou avec des renforts obtenus par pultrusion de façon à leur conférer une bonne résistance à la traction et à l'écrasement ainsi qu'une protection vis-à-vis des rongeurs s'il s'agit de câbles enterrés. Les renforts sont obtenus à partir d'une résine réticulable (thermodurcissable) renforcée de fibres de verre longues (rovings). Ils sont installés dans le câble à l'aide d'une cage tournante par une opération lente, qui ne peut de ce fait être réalisée en série avec l'extrusion de la gaine de revêtement du câble.

Outre le fait que la matière première utilisée pour obtenir des renforts poltrudés est coûteuse, un câble fabriqué de cette façon présente une résistance à la traction surdimensionnée et non justifiée lorsqu'il est destiné à être enterré.

Le document EP-A-0141723 divulgue un câble optique sans matériau métallique, dont l'âme centrale comportant des fibres optiques est entourée d'un revêtement tubulaire protecteur extrudé, d'une armure et d'une gaine extérieure extrudée. L'armure est constituée par des fils à haute résistance mécanique qui sont câblés sur le revêtement protecteur, ou par des fibres n'ayant pas de résistance à la compression qui sont disposées autour du revêtement et rigidifiées par un liant.

Les vitesses d'extrusion du revêtement protecteur, de mise en place des renforts et d'extrusion de la gaine extérieure sont adaptées pour être identiques, ce qui conduit à un procédé de fabrication relativement lent, indépendamment du fait qu'il est en tant que tel assez complexe.

C'est pourquoi le but de l'invention est de fournir un câble optique dans lequel les moyens de renfort servant d'armure au câble sont obtenus par extrusion au fur et à mesure de la fabrication du câble.

Un autre but de l'invention est de réaliser un procédé de fabrication d'un câble optique ne nécessitant pas une opération séparée pour la mise en place des moyens de renfort.

Un premier objet de l'invention est donc un câble optique comportant une âme contenant des fibres optiques, des moyens de renfort périphériques non métalliques pour armer le câble et une gaine extérieure thermoplastique, caractérisé en ce que les moyens de renfort sont constitués en résine thermoplastique contenant des fibres de verres courtes et sont extrudés directement en place autour de ladite âme.

Un second objet de l'invention est un procédé de fabrication en continu d'un câble optique du type ci-dessus caractérisé en ce qu'il consiste à extruder lesdits moyens de renfort directement en place, autour de ladite âme du câble dans une première extrudeuse, puis à refroidir l'ensemble formé de l'âme munie desdits moyens de renfort extrudés en place, tandis que ladite gaine est extrudée dans une seconde extrudeuse aval, puis le câble est refroidi.

Les buts, objets et caractéristiques de l'invention seront mieux compris à la lecture de la description qui suit faite en référence aux dessins dans lesquels :
la figure 1 représente schématiquement le procédé de fabrication du câble optique selon l'invention dans lequel les deux opérations d'extrusion des moyens de renfort et de la gaine extérieure sont réalisées en continu,
la figure 2 représente une coupe d'un câble optique obtenu avec une filière d'extrusion rainurée, et
la figure 3 représente une coupe d'un câble optique obtenu avec une filière d'extrusion à trous multiples.

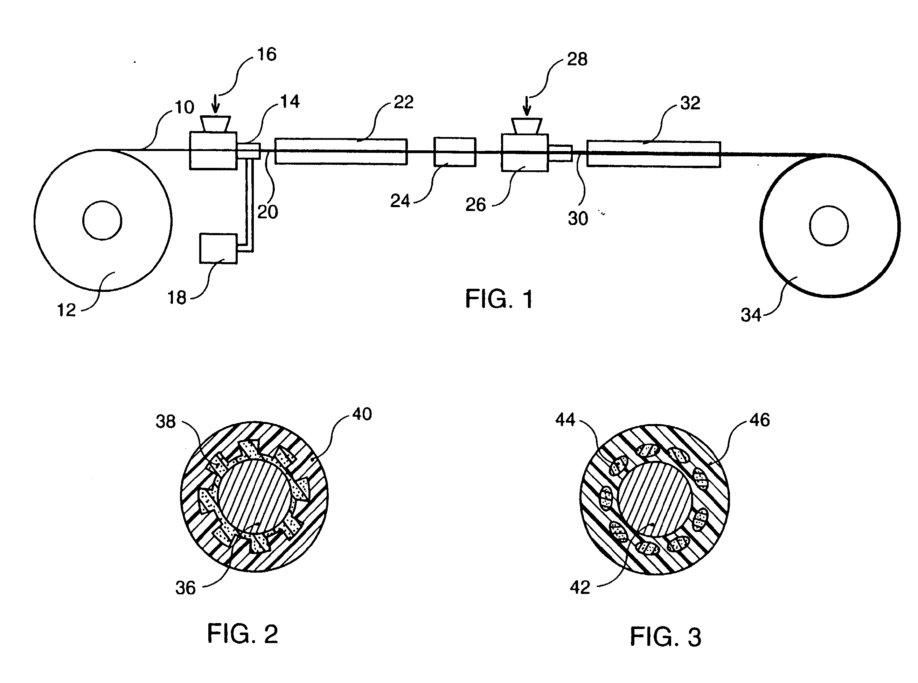

Selon le procédé de fabrication représenté sur la figure 1, l'âme 10 du câble qui contient les fibres optiques est fournie à partir du dérouleur 12 à une extrudeuse munie d'une filière d'extrusion 14. L'extrudeuse est alimentée par le matériau 16 utilisé pour composer les moyens de renfort du câble, à savoir de la résine thermoplastique (par exemple du polyamide) chargée de fibres de verre courtes, c'est à dire dont la longueur est inférieure à environ 5 mm. Le matériau utilisé pour obtenir les moyens de renfort est par exemple le matériau vendu sous la marque Grivory GV contenant de 20 à 60% de fibres de verre courtes dans ses différentes versions et fabriqué par EMS.

De préférence, la filière d'extrusion 14 est entraînée en rotation par l'entraîneur 18 pour que les moyens de renfort soient extrudés en hélice, ce qui diminue la rigidité du câble, son rayon de courbure minimum, et augmente sa résistance à l'écrasement.

Le câble 20 formé de l'âme et des moyens de renfort fournis par la filière d'extrusion 14 est refroidi dans un bac de refroidissement 22 puis ensuite séché dans l'appareil de séchage 24 avant d'alimenter l'extrudeuse munie d'une filière d'extrusion 26. Celle-ci est alimentée par le matériau 28 constituant la gaine extérieure du câble optique, généralement une résine thermoplastique, le plus fréquemment du type polyéthylène haute densité.

Le câble optique 30 définitif constitué de l'âme, des moyens de renfort et de sa gaine extérieure est refroidi dans un bac de refroidissement 32 avant d'être enroulé sur l'enrouleur 34.

La filière d'extrusion 14 qui sert à placer les moyens de renfort dans le câble, peut être une filière fixe annulaire, auquel cas le renfort est sous forme annulaire. Mais il est préférable d'utiliser une filière d'extrusion rainurée ou à trous. Dans le cas de la filière rainurée, le câble obtenu se présente en coupe comme sur la figure 2, c'est à dire avec une âme 36 entourée de moyens de renfort qui sont constitués par les créneaux 38 d'une couronne crénelée issus des rainures de la filière d'extrusion, et d'une gaine extérieure 40. Lorsque la filière d'extrusion 14 est une filière à trous, le câble obtenu se présente en coupe comme sur la figure 3, c'est à dire avec son âme 42 entourée de moyens de renfort 44 sous forme de brins séparés, et d'une gaine extérieure 46.

Comme on l'a vu précédemment, la filière d'extrusion qu'elle soit rainurée ou à trous, utilisée pour l'extrusion des moyens de renfort, est de préférence tournante de façon à ce que les moyens de renfort soient disposés en hélice autour de l'âme.

Comme il a déjà été mentionné, les câbles optiques obtenus par la présente invention sont utilisés de préférence comme câbles diélectriques enterrés pour lesquels il faut une bonne résistance à l'écrasement et contre les rongeurs, sans que cela nécessite une armure constituée de moyens de renfort poltrudés, ayant pour résultat des câbles surdimensionnés en ce qui concerne la résistance à la traction.

## Revendications

1. Procédé de fabrication en continu d'un câble optique, le dit câble étant du type comprenant une âme (36, 42) contenant les fibres optiques, des moyens de renfort périphériques non métalliques(38, 44) pour armer le câble et une gaine extérieure thermoplastique(40, 46), ledit procédé comportant des étapes successives de mise en place des moyens de renfort autour de l'âme, d'extrusion de ladite gaine sur les moyens de renfort en place et de refroidissement du câble et étant **caractérisé en ce qu'**il consite à assurer la mise en place des moyens de renfort par extrusion d'une résine thermoplastique contenant des fibres de verre d'une longueur inférieure à 5 mm autour de ladite âme défilant dans une première extrudeuse (14), puis à refroidir dans un premier bac de refroidissement (22) l'ensemble formé de l'âme muni des moyens de renfort extrudés en place, tandis que l'extrusion de ladite gaine est réalisée dans une seconde extrudeuse aval (26), puis le refroidissement dudit câble dans un second bac de refroidissement aval (32).

2. Procédé de fabrication selon la revendication 1, **caractérisé en ce que** la mise en place desdits moyens de renfort est réalisée dans ladite première extrudeuse (14) munie d'une filière d'extrusion rainurée.

3. Procédé de fabrication selon la revendication 1, **caractérisé en ce que** la mise en place desdits moyens de renfort est réalisée dans ladite première extrudeuse (14) munie d'une filière d'extrusion à trous multiples.

4. Procédé de fabrication selon la revendication 1, 2 ou 3, **caractérisé en ce que** la mise en place desdits moyens de renfort est réalisée dans ladite première extrudeuse (14) à filière d'extrusion tournante de manière à obtenir un câble dans lequel lesdits moyens de renfort sont disposés en hélice.

5. Câble optique, comportant une âme (36, 42) contenant les fibres optiques, des moyens de renfort périphériques non métalliques (38, 44) pour armer le câble et une gaine extérieure thermoplastique (40, 46), **caractérisé en ce que** lesdits moyens de renfort sont des moyens de renfort constitués en résine thermoplastique contenant des fibres de verre d'une longueur inférieure à 5 mm et extrudés directement en place autour de ladite âme (36, 42).

6. Câble optique selon la revendication 5, **caractérisé en ce que** lesdits moyens de renfort (38) constituent une couronne crénelée, obtenue en utilisant une filière d'extrusion rainurée.

7. Câble optique selon la revendication 5, **caractérisé en ce que** lesdits moyens de renfort (44) constituent des brins séparés, obtenus en utilisant une filière d'extrusion à trous multiples.

8. Câble optique selon la revendication 5, 6 ou 7, dans lequel lesdits moyens de renfort sont en hélice autour de l'âme.

9. Application du câble optique selon l'une des revendications 5 à 8, **caractérisée en ce que** ledit câble optique est nterré.

## Claims

1. Method of continuously producing an optical cable, said cable being of the type comprising an optical-fibre-containing core (36, 42), peripheral non-metallic reinforcing means (38, 44) for armouring the cable, and a thermoplastic outer sheath (40, 46), said method comprising successive steps of putting reinforcing means into place around the core, of extrusion of said sheath over the in-place reinforcing means, and of cooling the cable and being **characterised in that** it comprises putting the reinforcing means into place by extruding a thermoplastic resin containing glass fibres less than 5 mm in length around said core while it passes through a first extruder (14), and then cooling, in a first cooling tank (22), the unit formed by the core having reinforcing means extruded into place, while the extrusion of said sheath is carried out in a second, downstream extruder (26), followed by cooling of said cable in a second, downstream cooling tank (32).

2. Production method according to claim 1, **characterised in that** the putting into place of said reinforcing means is carried out in said first extruder (14) provided with a grooved extrusion die.

3. Production method according to claim 1, **characterised in that** the putting into place of said reinforcing means is carried out in said first extruder (14) provided with an extrusion die having multiple holes.

4. Production method according to claim 1, 2 or 3, **characterised in that** the putting into place of said reinforcing means is carried out in said first extruder (14) having a rotating extrusion die so as to obtain a cable wherein said reinforcing means are helically arranged.

5. Optical cable comprising an optical-fibre-containing core (36, 42), peripheral non-metallic reinforcing means (38, 44) for armouring the cable, and a thermoplastic outer sheath (40, 46), **characterised in that** said reinforcing means are reinforcing means composed of thermoplastic resin containing glass fibres less than 5 mm in length and extruded directly into place around said core (36, 42).

6. Optical cable according to claim 5, **characterised in that** said reinforcing means (38) form a crenellated ring, obtained by using a grooved extrusion die.

7. Optical cable according to claim 5, **characterised in that** said reinforcing means (44) form separate strands, obtained by using an extrusion die having multiple holes.

8. Optical cable according to claim 5, 6 or 7, wherein said reinforcing means are helically arranged around the core.

9. Application of the optical cable according to one of claims 5 to 8, **characterised in that** said optical cable is buried.

## Patentansprüche

1. Verfahren zur fortlaufenden Herstellung eines optischen Kabels, wobei das Kabel von der Art ist, die einen die optischen Fasern enthaltenden Kern (36, 42), nicht metallische, periphere Verstärkungsmittel (38, 44), um das Kabel zu armieren, und eine äußere thermoplastische Hülle (40, 46) aufweist, wobei das Verfahren aufeinander folgende Stufen des Anordnens der Verstärkungsmittel um den Kern, der Extrusion der Hülle auf den Verstärkungsmitteln vor Ort und der Kühlung des Kabels aufweist, und **dadurch gekennzeichnet ist, dass** es darin besteht, das Anordnen der Verstärkungsmittel durch Extrusion eines thermoplastischen Harzes, das Glasfasern mit einer Länge kleiner als 5 mm enthält, zu gewährleisten, wobei der Kern in einem ersten Extruder (14) abspult, dann die aus dem mit vor Ort extrudierten Verstärkungsmitteln ausgestatteten Kern gebildete Einheit, in einem ersten Kühlgefäß (22) abzukühlen, während die Extrusion der Hülle in einem zweiten, nachfolgenden Extruder (26) durchgeführt wird, dann die Abkühlung des Kabels in einem zweiten nachfolgenden Kühlgefäß (32).

2. Verfahren zur Herstellung nach Anspruch 1, **dadurch gekennzeichnet, dass** das Anordnen der Verstärkungsmittel in dem ersten Extruder (14) erfolgt, der mit einer gerillten Extrusionsdüse ausgestattet ist.

3. Verfahren zur Herstellung nach Anspruch 1, **dadurch gekennzeichnet, dass** das Anordnen der Verstärkungsmittel in dem ersten Extruder (14) erfolgt, der mit einer vielfach gelöcherten Extrusionsdüse ausgestattet ist.

4. Verfahren zur Herstellung nach Anspruch 1, 2 oder 3, **dadurch gekennzeichnet, dass** das Anordnen der Verstärkungsmittel in dem ersten Extruder (14) mit drehender Extrusionsdüse derart erfolgt, dass ein Kabel erhalten wird, in dem die Verstärkungsmittel schraubenförmig angeordnet sind.

5. Optisches Kabel, das einen Kern (36, 42) mit den optischen Fasern, nicht metallische, periphere Verstärkungsmittel (38, 44), zum Armieren des Kabels, und eine thermoplastische äußere Hülle (40, 46) aufweist, **dadurch gekennzeichnet, dass** die Verstärkungsmittel Verstärkungsmittel sind, die aus thermoplastischem Harz gebildet sind, das Glasfasern einer Länge kleiner als 5 mm enthält, und direkt vor Ort um den Kern (36, 42) extrudiert werden.

6. Optisches Kabel nach Anspruch 5, **dadurch gekennzeichnet, dass** die Verstärkungsmittel (38) eine ausgezackte Krone bilden, die durch Verwenden einer gerillten Extrusionsdüse erhalten wird.

7. Optisches Kabel nach Anspruch 5, **dadurch gekennzeichnet, dass** die Verstärkungsmittel (44) getrennte Einzeldrähte bilden, die durch Verwenden einer vielfach gelöcherten Extrusionsdüse erhalten werden.

8. Optisches Kabel nach Anspruch 5, 6 oder 7, in dem die Verstärkungsmittel schraubenförmig um den Kern angeordnet sind.

9. Anwendung des optischen Kabels nach einem der Ansprüche 5 bis 8, **dadurch gekennzeichnet, dass** das optische Kabel eingegraben ist.
